(19) **Europäisches Patentamt**

**European Patent Office**

**Office européen des brevets**

(11) Publication number: **0 327 677 B1**

(12) **EUROPEAN PATENT SPECIFICATION**

(45) Date of publication of patent specification:
**10.04.91 Bulletin 91/15**

(51) Int. Cl.$^5$: **C08L 71/12, C08L 65/00, C08L 23/00, // (C08L71/12, 65:00, 23:00)**

(21) Application number: **88116759.7**

(22) Date of filing: **10.10.88**

(54) **Polymer mixture comprising polyphenylene ether, polyoctenylene and polyethylene.**

(30) Priority: **08.01.88 NL 8800035**

(43) Date of publication of application:
**16.08.89 Bulletin 89/33**

(45) Publication of the grant of the patent:
**10.04.91 Bulletin 91/15**

(84) Designated Contracting States:
**DE FR GB IT NL**

(56) References cited:
**EP-A- 0 095 098**

(73) Proprietor: **GENERAL ELECTRIC COMPANY**
**1 River Road**
**Schenectady, N.Y. 12151 (US)**

(72) Inventor: **van der Meer, Roelof**
**General Electric Plastics B.V. P.O. Box 117**
**NL-4600 AC Bergen op Zoom (NL)**
Inventor: **Schless, Elisabeth Sophie**
**General Electric Plastics B.V. P.O. Box 117**
**NL-4600 AC Bergen op Zoom (NL)**

(74) Representative: **Schüler, Horst, Dr. et al**
**General Electric Praunheimer Landstrasse 50**
**W-6000 Frankfurt 90 (DE)**

## Description

The invention relates to a polymer mixture which comprises A. a polyphenylene ether and B. a polyoctenylene.

Polymer mixtures which comprise a polyphenylene ether and a polyoctenylene are known from DE-A-3518277. The known polymer mixtures have a favourable notch impact value, a good thermal non-deformability and a good processibility.

However, the sensitivity to solvents leaves to be desired. This applies in particular to articles formed from the known polymer mixture which, while under a stress, come in contact with organic solvents.

The invention provides polymer mixtures having a considerably reduced sensitivity to organic solvents.

The polymer mixture according to the invention is characterised in that the polymer mixture comprises 0.1-5 parts by weight of polyethylene per 100 parts by weight of A + B.

Due to the presence of a polyethylene the polymer mixture according to the invention has a better "environmental stress crack resistance" (ESCR).

The improvement of the ESCR obtained by incorporating a polyethylene in the polymer mixture is quite surprising. Other polymer mixtures, for example, those on the basis of a polyphenylene ether and a styrene-ethylene butylene block copolymer, show no essential improvement of their ESCR when polyethylene is added.

The addition of a polycondensate, for example, a polyalkylene terephthalate, a polyamide, to the polymer mixture is known from DE-A-3518277. Waxes, for example, oxidised hydrocarbons, may also be added as auxiliary substances to improve the processability.

The polymer mixture according to the invention comprises at any rate the following constituents :

A. one or more polyphenylene ethers

B. one or more polyoctenylenes and

C. one or more polyethylenes.

### A. Polyphenylene ether

Polyphenylene ethers are generally known polymers. Any polyphenylene ether known per se may be used in the polymer mixture according to the invention. An elaborate list of suitable polyphenylene ethers is to be found, for example, in WO 87/00540.

Particularly suitable are poly(2,6-dimethyl-1,4-phenylene) ether, poly(2,6-diethyl-1,4-phenylene) ether, poly(2-methyl-6-ethyl-1,4-phenylene)ether. It is also possible to use copolymers, for example, copolymers which comprise units derived from 2,3,6-trimethylphenyl and from 2,6-dimethylphenol.

### B. Polyoctenylenes

Polyoctenylenes are known per se. For this purpose, reference may be made to DE-A-3518277 and to the literature mentioned therein. Polyoctenylenes are generally prepared by a polymerisation reaction of cyclo-octene, in which a ring opening and a ring enlargement, respectively, may occur. All the types of polyoctenylenes mentioned in DE-A-3518277 may be used in the polymer mixture according to the invention.

### C. Polyethylenes

Many different types of polyethylenes are known, for example, HPDE, LDPE and LLDPE. Any known polyethylene may successfully be used in the polymer mixture according to the invention.

Preferably a polyethylene is used having a weight-averaged molecular weight of more than 5,000, even more preferably or more than 10,000.

In addition to polyethylene itself, copolymers may also be used which comprise units derived from ethylene and other comonomers, for example, propylene, butylene, isobutylene, in which the comonomer content is not higher than 20%.

The polymer mixture according to the invention preferably comprises A. 75-99.5 parts by weight of polyphenylene ether and B. 25-0.5 parts by weight of polyoctenylene per 100 parts by weight of A + B.

In addition to the constituents mentioned hereinbefore the polymer mixture according to the invention may comprise conventional additives. The quantity of additives preferably is 0-50 parts by weight per 100 parts by weight of A + B.

In addition to the constituents mentioned hereinbefore the polymer mixture according to the invention may comprise conventional additives. The quantity of additives preferably is 0-50 parts by weight per 100 parts by weight of A + B.

Examples of suitable additives are agents to improve the flame-retarding properties, stabilisers, pigments, dyes, fillers, for example, reinforcing fibres, for example, glass fibres or synthetic resin fibres.

The polymer mixture according to the invention can be obtained according to any technique of preparing polymer mixtures which comprise a polyphenylene ether. The individual constituents are preferably mixed collectively (compounded) in the melt in an extruder. The extrudate (in strand form) which emanates from the extruder is then chopped to form pellets. The pellets may be further precessed, for example, in an injection moulding apparatus.

Example I and comparative examples A, B, C, and D

Various polymer mixtures were preparing using the following constituents :

PPE : a polyphenylene ether, namely poly(2,6-dimethyl-1,4-phenylene)ether having an intrinsic viscosity of 41 ml/g measured in chloroform at 25°C.

PO : a polyoctenylene, namely a product commercially available as "VESTENAMER®8012".

SEBS : a styrene-ethylene butylene-styrene triblock copolymer having a styrene content of approximately 33% and an overall molecular weight of approximately 175,000.

PE : a polyethylene, namely an LDPE having a melt index of approximately 20 g/10 min. measured according to ISO R 292.

The various constituents were compounded in the quantities indicated hereinafter in the table in a Werner Pfleiderer double blade extruder (adjusted at 310 (average) °C ; blade speed 250 rpm). Standardised test rods according to ASTM D638 were injection moulded from the resulting pellets to determine the environmental stress crack resistance (ESCR). The ESCR was determined as follows : the rods were bent in a jig to an external elongation stress of 0,7%. Clamped in the jig the rods were immersed in an agressive organic medium/ namely tri-n-butyl phosphate. The time (in sec.) to fracture was measured (see table).

In addition, rods were injection moulded to determine the Izod Notched impact strength. The results obtained by measurement (room temperature) are also recorded in the table.

## TABLE

| Example | A | B | C | D | I |
|---|---|---|---|---|---|
| **Composition (parts by weight)** | | | | | |
| PPE | 100 | 94 | 94 | 94 | 94 |
| PO | - | 5 | - | - | 5 |
| SEBS | - | - | 5 | 5 | - |
| PE | - | - | - | 1 | 1 |
| **Properties** | | | | | |
| Izod notched impact (J/m) | 50 | 280 | 85 | 120 | 300 |
| ESCR (sec) | 65 | 185 | 140 | 150 | 490 |

The polymer mixture according to the invention (example I) has a notch impact value which is approximately equal to the notch impact value of the polymer mixture according to DE-A-3518277 (comparative example B). The ESCR of the polymer mixture according to the invention, however, is nearly three times as large as that the known polymer mixture.

This is a surprising result : such an improvement of the ESCR does not occur when a polyethylene is added (comparative example D) to known polymer mixtures (comparative example C) which do not contain polyoctenylene but a styrene-ethylene butylene block copolymer as an agent to improve the impact strength.

## Claims

1. A polymer mixture which comprises A. a polyphenylene ether and B. a polyoctenylene, characterised in that the polymer mixture comprises 0.1-5 parts by weight of polyethylene per 100 parts by weight of A + B.

2. A polymer mixture as claimed in Claim 1, characterised in that the mixture comprises A. 75-99.5% by weight of polyphenylene ether and B. 25-0.5% by weight of polyoctenylene, calculated with respect to the sum of the parts by weight of A plus B.

3. A polymer mixture as claimed in Claim 2, characterised in that the polymer mixture comprises 0-50 parts by weight of additives per 100 parts by weight of A + B.

## Ansprüche

1. Polymermischung die enthält :
A. einen Polyphenylenäther und
B. ein Polyoctenylen, dadurch gekennzeichnet, daß die Polymermischung 0,1-5 Gew.-Teile Polyäthylen pro 100 Gew.-Teile von A + B enthält.

2. Polymermischung nach Anspruch 1, dadurch gekennzeichnet, daß die Mischung enthält :
A. 75-99,5 Gew.-% Polyphenylenäther und
B. 25-0,5 Gew.-% Polyoctenylen berechnet mit Bezug auf die Summe der Gew.-Teile von A. plus B.

3. Polymermischung nach Anspruch 2, dadurch gekennzeichnet, daß die Polymermischung 0-50 Gew.-Teile Zusatzstoffe pro 100 Gew.-Teile von A + B enthält.

## Revendications

1. Mélange de polymères qui comprend A. un poly(oxyphénylène) et B. un polyocténylène, caractérisé en ce que le mélange de polymères comprend de 0,1 à 5 parties en poids de polyéthylène pour cent parties en poids de A + B.

2. Mélange de polymères selon la revendication 1, caractérisé en ce que le mélange comprend A. de 75 à 99,5% en poids de poly(oxyphénylène) et B. de 25 à 0,5% en poids de polyocténylène, calculé par rapport à la somme des parties en poids de A et de B.

3. Mélange de polymères selon la revendication 2, caractérisé en ce que le mélange de polymères comprend de 0 à 50 parties en poids d'additifs pour 100 parties en poids de A + B.